# EUROPÄISCHE PATENTSCHRIFT

(11) **EP 2 206 565 B1**
(45) Veröffentlichungstag und Bekanntmachung des Hinweises auf die Patenterteilung: **22.05.2013**
(21) Anmeldenummer: 09177842.3
(22) Anmeldetag: 03.12.2009
(51) Int. Cl.: B07C 5/12, B07C 5/36, B65G 29/02, B65G 47/84

(54) **Vorrichtung und Verfahren zum Aussondern von Vorformlingen**
Device and method for parcelling out preforms
Dispositif et procédé destinés à la séparation de pré-pièces brutes

(30) Priorität: 13.01.2009 DE 102009004819
(43) Veröffentlichungstag der Anmeldung: 14.07.2010
(73) Patentinhaber: Krones AG, 93073 Neutraubling (DE)
(72) Erfinder: Stoiber, Christian, 93185 Michelsneukirchen (DE); Schwöd, Gerhard, 93053 Regensburg (DE); Justl, Florian, 93339 Riedenburg (DE)
(74) Vertreter: Reichert, Werner Franz

(56) Entgegenhaltungen:
- FR-A1- 2 872 805

## Beschreibung

Die vorliegende Erfindung betrifft eine Vorrichtung zum selektiven Aussondern von Vorformlingen. Im Besonderen betrifft die Erfindung eine Vorrichtung zum selektiven Aussondern von Vorformlingen mit einer Sortiereinheit, die mindestens ein erstes Kontaktelement und mindestens ein zweites Kontaktelement besitzt. Die Kontaktelemente sind dabei derart ausgebildet, dass sie bei Bedarf an gegenüberliegenden Positionen einer Wandung des Vorformlings angreifen. Ebenso ist ein Transportweg vorgesehen, entlang dessen die Vorformlinge die Vorrichtung zum selektiven Aussondern durchlaufen.

Ferner betrifft die Erfindung ein Verfahren zum selektiven Aussondern von Vorformlingen.

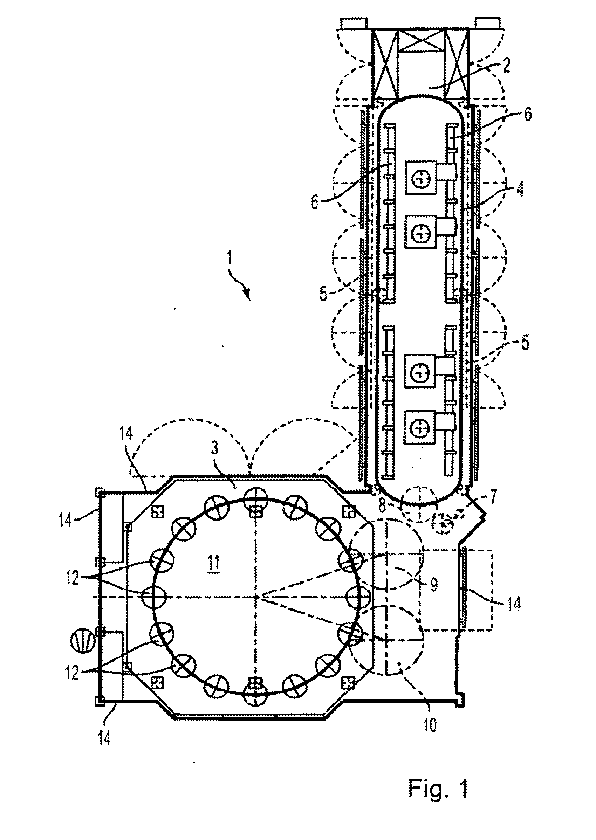

Eine Blasmaschine wird insbesondere zum Streckblasen von Vorformlingen verwendet. Um die Vorformlinge in der Blasmaschine verarbeiten zu können, müssen diese auf eine bestimmte Verarbeitungstemperatur gebracht werden. Hierzu durchlaufen die Vorformlinge einen entsprechenden Ofen, der die Vorformlinge auf die für den Blasvorgang erforderliche Temperatur bringt. Um einen reibungslosen Ablauf des Blasvorgangs gewährleisten zu können, muss auch sichergestellt sein, dass keine beschädigten Vorformlinge oder ungenügend positionierte Vorformlinge in den Ofen einlaufen. Somit gilt es, diese Vorformlinge vor dem Einlaufen in den Ofen auszusondern. Eine Blasmaschine selbst und der ihr vorgeschaltete Ofen ist hinlänglich aus dem Stand der Technik bekannt. Der Vollständigkeit halber wird auf die Beschreibung der Figur 1 verwiesen.

Die deutsche Offenlegungsschrift DE 195 21 105 A1 offenbart eine Vorrichtung und ein Verfahren zur Herstellung von Kunststoffhohlkörpern. Auch hier geht es darum, defekte Kunststoffrohlinge (Vorformlinge), die in einer Formstation in ihre gewünschte Form ausgeformt werden sollen, vor dem Einlauf in die Formstation auszusondern. Es ist eine Transportbahn vorgesehen, der ein Aussonderungsbereich zugeordnet ist, in welchem die Rohlinge derart geführt werden, dass sie nur von einer Seite lose unterstützt werden. Durch Signale von einer Inspektionsstation werden somit fehlerhafte Kunststoffrohlinge im Aussonderungsbereich ausgesondert.

Die deutsche Offenlegungsschrift DE 197 461 50 offenbart eine Vorrichtung zur Prüfung von Vorformlingen. Die Vorformlinge werden entlang eines Zuführelements transportiert und sind dafür vorgesehen, im Bereich einer Blasmaschine zu einem Behälter aufgeblasen zu werden. Die Vorformlinge weisen eine tubusartige Gestalt mit einem geschlossenen Boden und einem Mündungsabschnitt auf. Der Mündungsabschnitt begrenzt eine Mündungsöffnung der Vorformlinge. Quer zu einer Transportrichtung der Vorformlinge ist eine Drehachse eines Detektorrades angeordnet. Das Detektorrad trägt sternförmig auf radial nach außen weisenden Stegen gerundet konturierte Detektorköpfe. Die Detektorköpfe weisen eine an einem Mündungsdurchmesser der Vorformlinge angepasste Dimensionierung auf. In einer Umgebung des Detektorrades ist mindestens ein Segment des Zuführelements positionsveränderlich angeordnet. Die Drehachse des Detektorrades weist in einer Prüfpositionierung einen Abstand zum Zuführelement derart auf, dass bei einer Rotation des Detektorrades die Detektorköpfe mindestens bereichsweise in den Mündungsabschnitt der Vorformlinge einführbar sind. Das Segment des Zuführelements ist mit einem Betätigungselement verbunden, dass bei einer Detektion einer mangelhaften Einführbarkeit des Detektorkopfes in den Mündungsabschnitt des Vorformlings eine Positionsveränderung des Segments zur Entfernung des Vorformlings aus dem Bereich des Zuführelements auslöst.

Die deutsche Patentschrift DE 102 59 589 B3 offenbart ein Verfahren und eine Vorrichtung zum Herstellen von Hohlkörpern aus Kunststoff. Vor dem Herstellen der Hohlkörper müssen die Vorformlinge erwärmt werden. Hierzu werden die Vorformlinge vor dem Erwärmen kontrolliert und es wird zumindest ein Teil der fehlerhaften Vorformlinge nach dem Erwärmen ausgeschieden. Dieses Verfahren und die dazugehörige Vorrichtung sind mit geringem Platz- und Kostenaufwand realisierbar und beeinträchtigen den Ausstoß an fertigen Hohlkörpern nur geringfügig.

Das US-Patent 4,693,375 offenbart eine Vorrichtung zum Handhaben von Vorformlingen. Die Vorrichtung dient zum Orientieren und Testen einer Vielzahl von Vorformlingen. Die Vorrichtung umfasst einen Orientierer, eine Wendeeinrichtung und einen Tester. Der Tester umfasst im Wesentlichen ein Sternrad, um die Vorformlinge entlang eines geschwungenen Weges zu führen. Es ist eine Brücke und eine Kurvenform für die Detektion von fehlerhaften Vorformlingen vorgesehen. Dies verhindert, dass aus defekten Vorformlingen fertige Endprodukte hergestellt werden.

Die deutsche Offenlegungsschrift DE 197 375 527 A1 offenbart ein Verfahren und eine Vorrichtung zur Herstellung von Kunststoffhohlkörpern. Es gilt defekte Vorformlinge, die zu den Kunststoffhohlkörpern in einer Heiz- und Blasstation verarbeitet werden, vor dem Einlaufen in die Heizstation auszusondern. Hierzu ist eine Aussonderungsstation vorgesehen, die ein Signal von einer Inspektionsstation erhält, wenn ein defekter Rohling festgestellt wird. Anhand dieses Signals wird dann automatisch der defekte Rohling ausgesondert.

Die deutsche Offenlegungsschrift DE 1 604 423 offenbart eine automatische Behälterprüf- und Auswurfvorrichtung. Es ist ein Träger für einen Behälter mit offenem Halsteil vorgesehen. Mit einer Einrichtung können Störungen des Halsteils festgestellt werden. Die Störung wird über eine entsprechende Axial-Relativbewegung des Vorformlings festgestellt. Dazu ist eine Passvorrichtung vorgesehen, die eine Verschiebung des Vorformlings feststellt. Ebenso ist eine Vorrichtung vorgesehen, die aufgrund des Signals der Tastvorrichtung den Behälter auswirft.

Die deutsche Gebrauchsmusterschrift DE 201 14 032 U1 offenbart eine Vorrichtung zum Aussondern von fehlerhaften Vorformlingen mit einem Halskragen. Die Vorrichtung besitzt ein steuerbares, direkt auf die Vorformlinge einwirkendes Sortierorgan, sowie in dessen Wirkungsbereich mindestens eine an der Unterseite des Halskragens angreifende Tragfläche. Das Sortierorgan ist derart ausgebildet, dass der Vorformling im Wesentlichen in axialer Richtung den mit dem Halskragen versehenen Vorformling gegen die Tragfläche drängt. Die Tragfläche ist elastisch nachgiebig ausgebildet, so dass sie durch den Halskragen eines vom Sortierorgan beaufschlagten Vorformlings außer Eingriff mit dem Halskragen bewegbar ist. Dadurch ist es möglich, einen fehlerhaften Vorformling auszusondern.

Die europäische Patentschrift EP 1 781 460 B1 offenbart eine Förderanlage für eine Vorrichtung, die eine Einrichtung zum Auswurf schlecht erfasster Vorformlinge umfasst. Die Vorformlinge werden mit einer Greifeinrichtung erfasst. Dadurch ist es möglich, dass die Greifeinrichtung in axialer Richtung eine Versetzung nach oben und nach unten in Bezug auf einen zugeordneten Träger ausgebildet ist. Durch eine entsprechende mechanische Rampe ist das Auswerfen eines als fehlerhaft bzw. mangelhaft positionierten Vorformlings möglich.

Aufgabe der Erfindung ist, eine Vorrichtung zum selektiven Aussondern von Vorformlingen zu schaffen, mit der es möglich ist, beschädigte oder falsch gehalterte Vorformlinge sicher auszusondern, ohne dass dabei andere, nicht beschädigte Vorformlinge, ungewollt ausgestoßen werden. Hinzu kommt, dass es mit der erfindungsgemäßen Vorrichtung möglich sein soll, alle Arten von Vorformlingen verarbeiten zu können.

Diese Aufgabe wird gelöst, durch eine Vorrichtung, die die Merkmale des Anspruchs 1 umfasst.

Aufgabe der Erfindung ist zudem, ein Verfahren zum selektiven Aussondern von Vorformlingen zu schaffen, mit dem gewährleistet ist, dass Vorformlinge unabhängig von ihrem Typ vor dem Einlauf in einem Bogen einer Blasmaschine ausgesondert werden können.

Diese Aufgabe wird gelöst durch ein Verfahren, das die Merkmale des Anspruchs 10 umfasst.

Die Vorrichtung besitzt hierzu vorteilhafter Weise mindestens ein erstes Kontaktelement, das auf einem ersten Träger sitzt. Ferner ist mindestens ein zweites Kontaktelement vorgesehen, das auf einem zweiten Träger angeordnet ist. Gemäß einer ersten Ausführungsform sind der erste und der zweite Träger drehbar auf einer gemeinsamen Achse angeordnet. Dabei sind lediglich die zweiten Kontaktelemente in Richtung der gemeinsamen Achse beweglich ausgebildet. Eine weitere Ausführungsform kann derart ausgebildet sein, dass die zweiten Kontaktelemente über eine Kurve an eine Position gebracht werden, an der sie mit dem ersten Kontaktelement in Wirkzusammenhang treten können, um den auszusondernden Vorformling zu greifen. Das erste und das zweite Kontaktelement können den auszusondernden Vorformling kraftschlüssig und/oder formschlüssig halten.

Bei der in den Figuren gezeigten Ausführungsform ist der erste Träger kreisförmig aufgebaut und trägt mehrere erste Kontaktelemente, die auf einem konzentrischen Kreis um die gemeinsame Achse herum angeordnet sind. Die ersten Kontaktelemente besitzen eine strukturierte Oberfläche, die mit der Wandung des Vorformlings in Kontakt tritt. Der Kontakt zwischen dem ersten Kontaktelement und der Wandung des Vorformlings wird nur dann hergestellt, wenn es gilt, diesen entsprechenden Vorformling auszusondern und den Vorformling somit nicht in den Bereich des Heizofens für die Blasmaschine gelangen zu lassen.

Ebenso umfasst die Vorrichtung zum Aussondern der Vorformlinge einen zweiten Träger, der ebenfalls gemäß der hier gezeigten Ausführungsform kreisförmig ausgebildet ist. Auf dem kreisförmigen Träger sitzen mehrere zweite Kontaktelemente, ebenfalls gleich verteilt um eine gemeinsame Achse herum, auf einem konzentrischen Kreis. Jedes der zweiten Kontaktelemente ist mit einer Vorspann- und Verriegelungseinrichtung versehen, die bei Bedarf eines der zweiten Kontaktelemente für die Bewegung in axialer Richtung freigibt. Damit ist es möglich, dass das zweite Kontaktelement in Wirkzusammenhang mit dem ersten Kontaktelement den Vorformling klemmt.

Das zweite Kontaktelement ist ein mit einer Feder vorgespannter Kolben, der an einer Vorderseite eine Kontaktfläche trägt, die mit der Wandung des Vorformlings in Kontakt tritt. Die Kontaktfläche des zweiten Kontaktelements ist als Ringschneide ausgebildet. Die auszusondernden Vorformlinge können Vorformlinge mit oder ohne Tragring sein.

Für den Transportweg der Vorformlinge ist ein Sensor vorgesehen, der auf mechanische Art und Weise oder über optische Methoden die auszusondernden Vorformlinge erkennt. Bei der mechanische Art und Weise ist der Sensor ein Näherungsinitiator, der die Position des jeweiligen Greifers für die Vorformlinge erfasst und bei einer Fehlstellung des jeweiligen Greifers die Zeit ermittelt, zu der der entsprechende Vorformling an die Vorrichtung zum Aussondern des Vorformlings gelangt. Wird der auszusondernde Vorformling mit einer optischen Methode erkannt, dann wird die optische Methode mittels einer Kamera oder eine Lichtschrankenanordnung realisiert.

Für den Transport der Vorformlinge ist eine Transportkette vorgesehen, die über einen Antrieb mit der Vorrichtung zum Aussondern der Vorformlinge synchronisiert ist. Die Synchronisierung erfolgt z. B. elektronisch über einen EnDat-Geber. Der Transportweg für die Vorformlinge ist derart angelegt, dass die Vorformlinge zwischen dem ersten Träger und dem zweiten Träger verlaufen.

Das Auslösen des vorgespannten mindestens zweiten Kontaktelements erfolgt mittels eines Schnellschaltzylinders. Die Auslösung des Schnellschaltzylinders bewirkt eine Schwenkbewegung eines Verriegelungshebels, so dass das ausgewählte zweite Kontaktelement auf den auszusondernden Vorformling trifft und diesen zusammen mit dem ersten Kontaktelement hält. Der erste Träger hat eine Kurve ausgeformt, so dass bei der Drehbewegung des ersten Trägers und des zweiten Trägers der geklemmte Vorformling für einen Teilbereich der Drehbewegung eine Längsachse des Vorformlings in Z-Koordinatenrichtung verläuft. Durch diese besondere Ausgestaltung ist es möglich, dass der auszusondernde Vorformling keinen der nicht auszusondernden Vorformlinge in der Sortiereinheit berührt.

Der erste Träger und der zweite Träger sind mittels eines Doppelschlittens und eines Links-/Rechtsgewindes auf den Durchmesser und die Länge der zu verarbeitenden Vorformlinge einstellbar.

Bei dem Verfahren zum selektiven Aussondern von Vorformlingen werden zunächst mehrere Vorformlinge entlang eines Transportweges mit jeweils einem Greifer transportiert. Mit einem Sensor, der im Transportweg der Vorformlinge angeordnet ist, wird auf mechanische Art und Weise erkannt, ob auszusondernde Vorformlinge im Transportweg vorliegen. Der Transportweg für die Vorformlinge ist derart angelegt, dass die Vorformlinge zwischen dem ersten kreisförmigen Träger und einem zweiten kreisförmigen Träger verlaufen. Hierzu hat der erste Träger mehrere erste Kontaktelemente und der zweite Träger eine entsprechende Vielzahl an zweiten Kontaktelementen ausgebildet. Der erste Träger und der zweite Träger sind um eine gemeinsame Achse synchron zum Transport der Vorformlinge entlang des Transportweges bewegbar bzw. drehbar. Lediglich die zweiten Kontaktelemente sind derart gezielt in axialer Richtung der gemeinsamen Achse bewegbar, dass ein auszusondernder Vorformling zwischen dem ersten Kontaktelement und dem entsprechenden zweiten Kontaktelement geklemmt wird. Der erste Träger hat eine Kurve ausgeformt, so dass bei der Drehbewegung der geklemmte Vorformling für einen Teilbereich der Drehbewegung des ersten Trägers die Längsachse des Vorformlings in Z-Koordinatenrichtung ausgerichtet bleibt. Damit ist sichergestellt, dass der auszusondernde Vorformling keine nicht auszusondernden Vorformlinge berührt und diese ungewollt herunterschlägt.

Jedes der zweiten Kontaktelemente ist mit einer Vorspann- und Verriegelungseinrichtung versehen. Die Vorspann- und Verriegelungseinrichtung kann bei Bedarf eines der zweiten Kontaktelemente für die Bewegung in axialer Richtung freigeben. Somit wird der Vorformling zwischen dem zweiten Kontaktelement und dem ersten Kontaktelement geklemmt.

Mit der erfindungsgemäßen Vorrichtung und dem erfindungsgemäßen Verfahren ist es möglich, sowohl Vorformlinge mit einem Tragring als auch Vorformlinge ohne einen Tragring zu verarbeiten und diese entsprechend bei Bedarf auszusondern. Die auszusondernden Vorformlinge werden mit einem zweiten Kontaktelement, einem sogenannten Stößel, der durch eine Feder vorgespannt ist, gegriffen. Dadurch wird der Vorformling zwischen dem ersten Kontaktelement und dem zweiten Kontaktelement gehalten. Das erste Kontaktelement und das zweite Kontaktelement sind jeweils auf einem kreisförmigen Träger (einem sogenannten Rotor) angeordnet. Der erste Träger und der zweite Träger rotieren im Uhrzeigersinn, so dass das erste Kontaktelement annähernd synchron mit der Ofenkette, welche den Transportweg für die Vorformlinge bildet, mitbewegt wird. Da der erste Träger und der zweite Träger synchron rotieren, ist es möglich, dass der zwischen dem ersten Kontaktelement und dem zweiten Kontaktelement geklemmte Vorformling abgezogen wird und letztendlich in einen Auffangbehälter fällt. Die Federn, welche die zweiten Kontaktelemente vorspannen, werden durch eine Topfkurve während der Rotation des ersten und des zweiten Trägers wieder gespannt.

Wenn das zweite Kontaktelement bzw. die zweiten Kontaktelemente mittels der Topfkurve in gespannter Stellung stehen, wird ein am Umfang des zweiten Trägers drehbar befestigter Verriegelungshebel durch eine Schenkelfeder umgelegt. Somit ist das zweite Kontaktelement verriegelt. Für jedes zweite Kontaktelement ist ein Hebel angebracht. Das Auslösen erfolgt mittels eines Schnellschaltzylinders. Über einen Hebel wird eine Schaltrolle geschaltet, die wiederum den Verriegelungshebel des zweiten Kontaktelements in eine andere Stellung umlegt. Dadurch wird der Greifvorgang bzw. Haltevorgang ausgelöst und der Vorformling wird zwischen dem ersten Kontaktelement und dem zweiten Kontaktelement gehaltert.

Die ersten Kontaktelemente sind derart auf dem kreisförmigen Träger angeordnet, dass während des Abziehvorgangs der Vorformling mit seiner Längsachse im Wesentlichen in Z-Koordinatenrichtung verläuft. Hierzu ist eine entsprechende Kurve im ersten Träger ausgebildet, die die ersten Kontaktelemente während des Abziehvorgangs gerichtet hält. Ohne diese Zusatzfunktion würde der abzuziehende Vorformling den vor ihm laufenden Vorformling berühren und diesen dadurch im schlimmsten Fall vom Greifer schlagen.

Die gesamte Vorrichtung kann auf den Typ der zu verarbeitenden Vorformlinge eingestellt werden. Hierzu können das erste Kontaktelement und das zweite Kontaktelement mittels eines Doppelschlittens und eines Rechts-/Linksgewindes stufenlos zueinander eingestellt werden. Der maximale zu verarbeitende Durchmesser des Körpers der Vorformlinge beträgt ca. 65 mm. Ebenso ist es möglich, mittels des Doppelschlittens die Vorrichtung in der Höhe auf den Typ der zu verarbeitenden Vorformlinge einzustellen. Die maximale Länge des Körpers der zu verarbeitenden Vorformlinge beträgt etwa 150 mm.

Der Antrieb der Vorrichtung erfolgt mittels eines Servomotors, der über ein Winkelgetriebe den ersten Träger und den zweiten Träger (Rotor) in entsprechender Art und Weise dreht. Die Teilung des ersten Trägers und des zweiten Trägers ist abhängig von der Teilung des Transportweges (Ofenkettenteilung).

Die Vorformlinge sollen vor dem Einlaufen in den Ofen abgezogen werden. Hierzu ist ein Sensor vorgesehen, der als Näherungsinitiator ausgebildet ist. An der Steuerkopfkurve des Ofens wird erkannt, ob sich ein fehlerhafter Vorformling im Transportweg befindet. Das bewegliche Kurvensegment, das den Greifer in die Mündung des Vorformlings drückt, hebt ab, wenn dies wegen einer Deformation der Mündung nicht oder nicht vollständig ausgeführt worden ist. Dieses Abheben der Kurve wird mit dem Sensor erkannt, wodurch ein Signal weiter an die Sortiereinrichtung geliefert wird. Die Sortiereinrichtung ist elektronisch mittels eines sogenannten EnDat-Gebers mit dem Transportweg (Ofenkette) synchronisiert. Dieser EnDat-Geber ist mechanisch mit der Hauptwelle des Ofens gekoppelt.

Im Folgenden sollen Ausführungsbeispiele die Erfindung und ihre Vorteile anhand der beigefügten Figuren näher erläutern.

Figur 1 zeigt eine schematische Darstellung einer Blasmaschine, die mit einem Ofen verbunden ist, der der Blasmaschine die Vorformlinge mit einer definierten Temperatur zuführt.

Figur 2 zeigt eine perspektivische Ansicht der Vorrichtung zum selektiven Aussondern von Vorformlingen.

Figur 3 zeigt eine Schnittansicht der Vorrichtung zum selektiven Aussondern von Vorformlingen.

Figur 4 zeigt eine schematische Ansicht der Anordnung der Detektionseinrichtung innerhalb der Vorrichtung zum Transport der Vorformlinge.

Figur 5 zeigt eine Detailansicht des in Figur 4 mit C bezeichneten Kreises.

Figur 6 zeigt weiterhin eine perspektivische Ansicht des Systems zum Transport der Vorformlinge, wobei hier besonderes Augenmerk auf die Achse gerichtet ist, mit welcher der Transportweg der Vorformlinge angetrieben wird.

Figur 7 zeigt eine perspektivische Ansicht des Getriebemotors, welcher die Vorformlinge bzw. den Transportweg für die Vorformlinge antreibt.

Figur 8 zeigt einen Querschnitt des zweiten Trägers für die zweiten Kontaktelemente, der um eine Achse drehbar angeordnet ist.

Figur 9 zeigt eine perspektivische Ansicht des zweiten Trägers.

Figur 10 zeigt eine perspektivische Ansicht eines Schnellschaltzylinders, mit dem die vorgespannten zweiten Kontaktelemente entriegelt werden, damit ein bestimmter und ausgewählter Vorformling ausgesondert werden kann.

Figur 11 zeigt eine perspektivische Ansicht des ersten Trägers, der um eine gemeinsame Achse mit dem zweiten Träger drehbar angeordnet ist.

Die nachfolgende Beschreibung bezieht sich auf eine Vorrichtung zum Aussondern von Vorformlingen, bevor diese in einen Ofen zum Vorheizen der Vorformlinge gelangen. Mit den aufgeheizten Vorformlingen werden letztendlich in einer Blasmaschine, welche ein Blasrad besitzt, die herzustellenden Kunststoffbehälter bzw. die herzustellenden Kunststoffflaschen gebildet. Ferner sei darauf hingewiesen, dass in den verschiedenen Figuren für gleiche Elemente oder gleich wirkende Elemente das gleiche Bezugszeichen verwendet wird.

Figur 1 zeigt eine schematische Ansicht einer Vorrichtung, mit der Kunststoffbehälter im Wesentlichen durch ein Streck-Blasverfahren hergestellt werden. In der nachfolgenden Beschreibung wird der Begriff "Kunststoffflasche" als gleichbedeutend für den Begriff "Kunststoffbehälter" verwendet. Die Vorrichtung 1 besteht im Wesentlichen aus einem Ofen, in die Vorformlinge (nicht dargestellt) für die herzustellenden Kunststoffflaschen auf eine bestimmte Temperatur gebracht werden, damit aus diesen Vorformlingen die Kunststoffflaschen im Blasverfahren bzw. Streck-Blasverfahren hergestellt werden können. Mit dem Ofen 2 ist eine Blasmaschine 3 verbunden. In dem Ofen 2 ist eine Fördereinrichtung 4 vorgesehen, die eine Vielzahl von Vorformlingen an einer Heizeinrichtung 5 vorbeiführt. Zum Inneren des Ofens hin ist die Transporteinrichtung mittels Wärme reflektierenden Kacheln 6 abgeschirmt. An einer Übergabeposition 7 werden die Vorformlinge in den Ofen 2 eingeleitet. An einer Ausgabeposition 8 werden die erwärmten Vorformlinge an eine Eingebeposition 9 für die Blasmaschine 3 übergeben. An einer Ausgabeposition 10 der Blasmaschine 3 werden die fertigen Kunststoffflaschen zu einer weiteren Bearbeitung bzw. zur Abfüllung (nicht dargestellt) ausgegeben.

In der in Figur 1 gezeigten Darstellung umfasst die Blasmaschine eine Transporteinrichtung 11, an der die Vielzahl der Formenträger angeordnet ist. In der hier gezeigten schematischen Darstellung der Blasmaschine 3 ist die Transporteinrichtung 11 als Rad ausgebildet. Es ist ebenso denkbar, dass die Transporteinrichtung als im Wesentlichen lineare Transporteinrichtung ausgebildet ist.

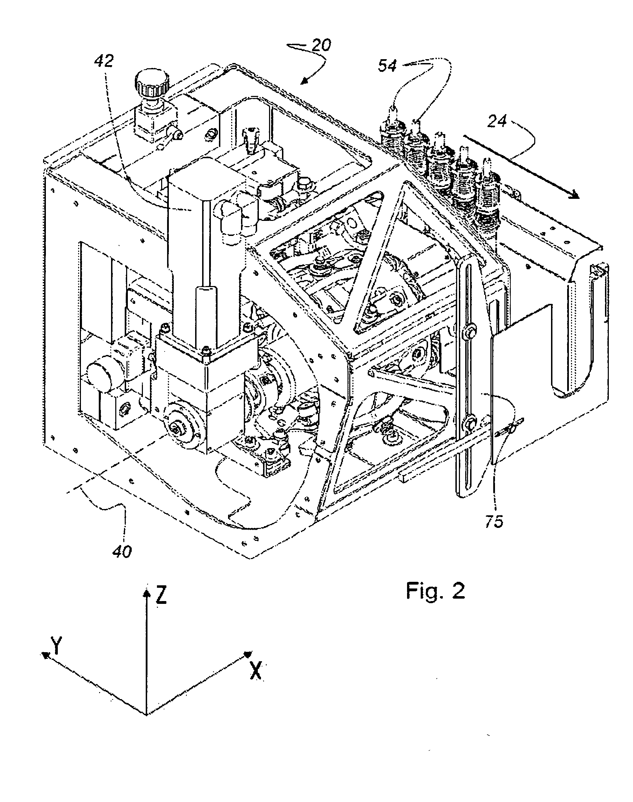

Figur 2 zeigt eine perspektivische Ansicht der Vorrichtung 20 zum selektiven Aussondern von Vorformlingen 30. Die Vorrichtung 20 besitzt mindestens eine Sortiereinheit 21. In der Sortiereinheit 21 werden fehlerhafte Vorformlinge, welche mittels Greifer 54 entlang eines Transportweges 24 in der Vorrichtung 20 transportiert werden, ausgesondert. Es ist ein Getriebemotor 42 vorgesehen, der eine Achse 40 antreibt, auf der die Elemente der Sortiereinrichtung 21 sitzen.

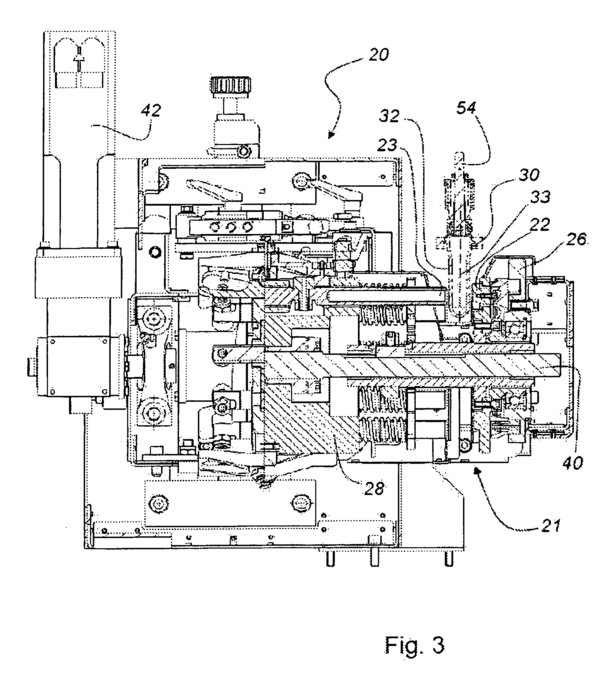

Figur 3 zeigt eine Schnittdarstellung der Vorrichtung 20 zum Aussortieren von fehlerhaften Vorformlingen 30. Wie bereits erwähnt, wird eine Achse 40 mittels eines Getriebemotors 42 angetrieben. Auf der Achse 40 sind ein erster Träger 26 und ein zweiter Träger 28 vorgesehen. Die Sortiereinheit 21 wird im Wesentlichen aus dem ersten Träger 26 und dem zweiten Träger 28 gebildet. Der erste Träger 26 besitzt mehrere Kontaktelemente 22. In entsprechender Weise besitzt der zweite Träger 28 ebenfalls zweite Kontaktelemente 23, die mit den entsprechenden ersten Kontaktelementen 22 des ersten Trägers 26 dann zusammenwirken, wenn es gilt, einen bestimmten Vorformling, welcher fehlerhaft ist, auszusondern. Der Vorformling 30 besitzt eine Längsachse 33 und ist von einer Wandung 32 umgeben. Die ersten Kontaktelemente 22 und die zweiten Kontaktelemente 23 sind dabei derart angeordnet, dass sie bei Bedarf (der Vorformling soll ausgesondert werden) an der Wandung des Vorformlings 30 angreifen. Bei der Drehung des ersten Trägers 26 und des zweiten Träger 28 wird der nun geklemmte Vorformling 30 vom Greifer 54 abgezogen.

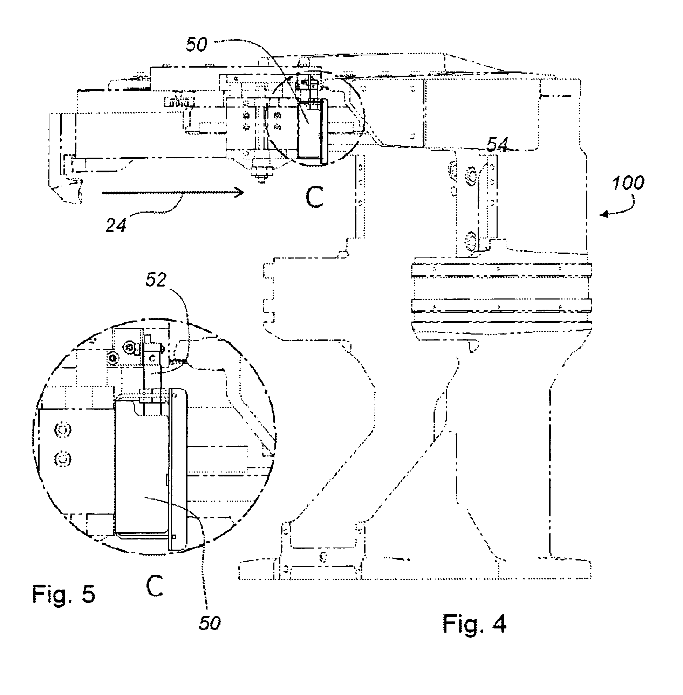

Figur 4 zeigt eine Ansicht der Anordnung des Sensors 50 innerhalb des Transportwegs 24 der Vorformlinge. Die Teile der Vorrichtung 100 zum Transport der Vorformlinge 30 sind in der Darstellung der Figur 4 gestrichelt gekennzeichnet. Diese Elemente sind für den Gegenstand der gegenwärtigen Erfindung nicht relevant und werden lediglich der Übersicht halber dargestellt.

Figur 5 zeigt eine vergrößerte Darstellung des in Figur 4 mit dem Buchstaben C gekennzeichneten Bereichs. Der Sensor 50 sitzt im Transportweg 24 der Vorformlinge 30. Mittels eines Näherungsinitiators 52 wird die Position des Greifers 54 gemessen, der die Vorformlinge entlang des dafür vorgesehenen Transportweges 24 bewegt. Ist der Greifer nicht wie vorbestimmt in den Vorformling 30 eingeführt, so wird über den Näherungssensor 52 ein Signal ausgegeben.

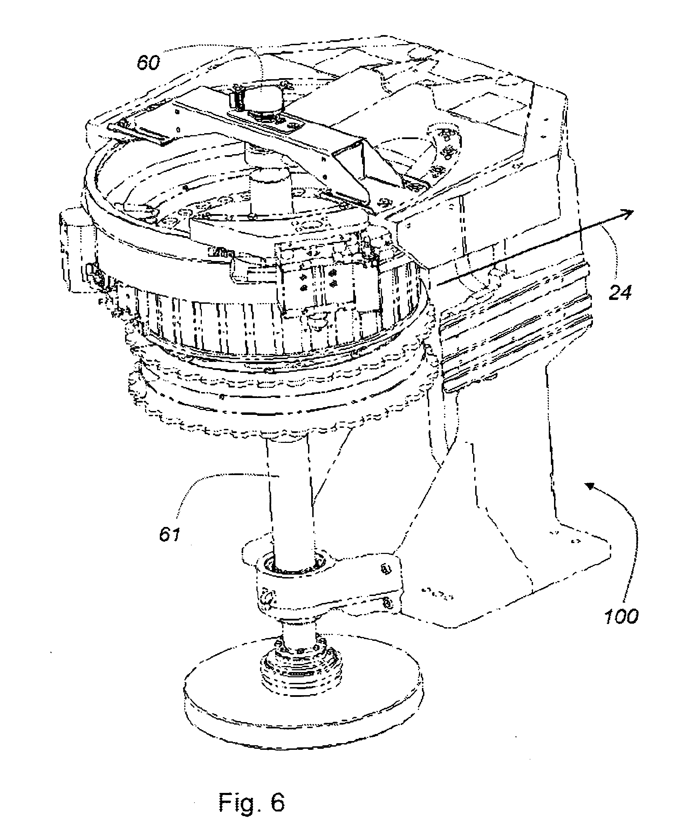

Figur 6 zeigt ebenfalls eine perspektivische Ansicht der in Figur 4 gezeigten Vorrichtung, wobei eine Achse 61 dargestellt ist, die von einem zentralen Motor angetrieben wird. Über den Antrieb der Achse 61 wird der Transportweg 24 für die Vorformlinge 30 in Bewegung versetzt. Mittels eines EnDat-Gebers 60 wird die Umdrehung gemessen, so dass man über die Position der Vorformlinge im Transportweg informiert ist. Wird mittels des Sensors 50 eine schlechte Position des Greifers 54 festgestellt, wird über den Endat-Geber 60 ermittelt, wie lange es dauert, dass dieser schlecht positionierte Vorformling 30 an die Position innerhalb der Sortiereinrichtung 21 gelangt, damit der Vorformling von dem ersten Kontaktelement 22 und dem zweiten Kontaktelement 23 ergriffen werden kann und in der erfindungsgemäßen Art und Weise ausgesondert wird.

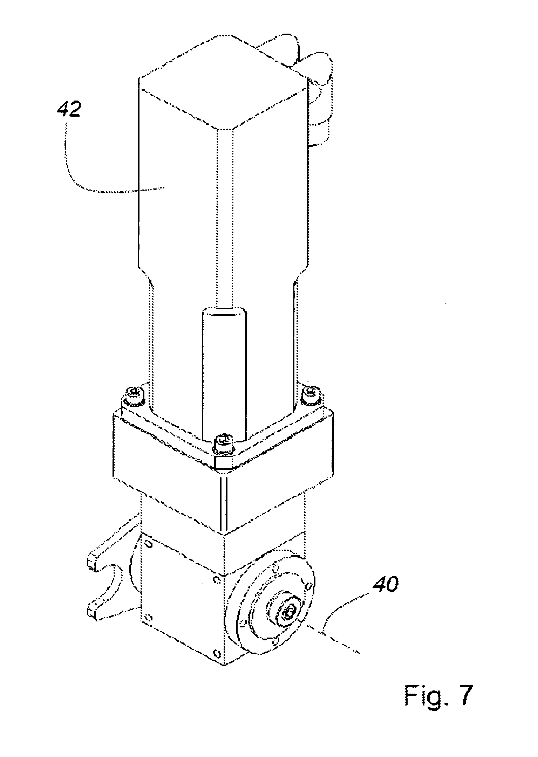

Figur 7 zeigt eine perspektivische Ansicht des Motors 42, der die gemeinsame Achse 40 antreibt, auf dem das erste Kontaktelement 22 und das zweite Kontaktelement 23 sitzen. Der Antrieb 42 wird dabei derart synchronisiert, dass die Information vom Endat-Geber 60 derart verwendet wird, um sicherzustellen, dass der richtige, falsch positionierte oder fehlerhafte Vorformling 30 zwischen dem ersten Kontaktelement 22 und dem zweiten Kontaktelement 23 gegriffen wird, um diesen Vorformling 30 letztendlich auszusondern.

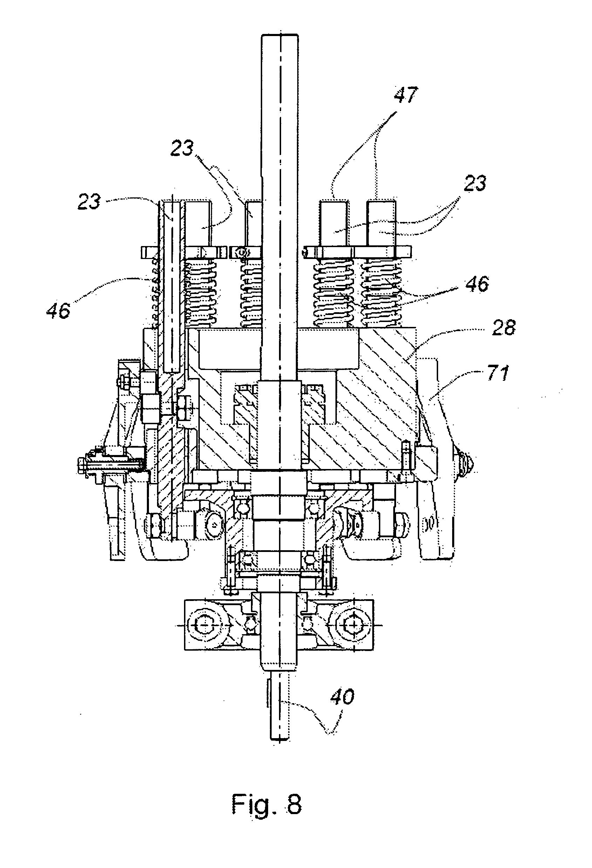

Figur 8 zeigt eine Schnittdarstellung des zweiten Trägers 28, der auf der gemeinsamen Achse 40 angeordnet ist und über den Motor 42 gedreht werden kann. Der zweite Träger 28 trägt eine Vielzahl von zweiten Kontaktelementen 23. Die zweiten Kontaktelemente 23 sind dabei jeweils über Federn 46 in Richtung der Achse 40 vorgespannt. Jedem der zweiten Kontaktelemente 23 ist ein Verriegelungshebel 71 zugeordnet, welche die zweiten Kontaktelemente 23 in der vorgespannten Position hält. Die zweiten Kontaktelemente 23 sind im Wesentlichen aus einem Kolben gebildet, von denen jeder eine Kontaktfläche 47 ausgebildet hat. Nachdem, aufgrund der Synchronisation, der Verriegelungshebel 71 freigegeben wird, bewegt sich das jeweils ausgewählte zweite Kontaktelement 23 in Richtung der Achse 40 und klemmt somit in Zusammenwirkung mit dem ersten Kontaktelement 22 den auszusondernden Vorformling 30.

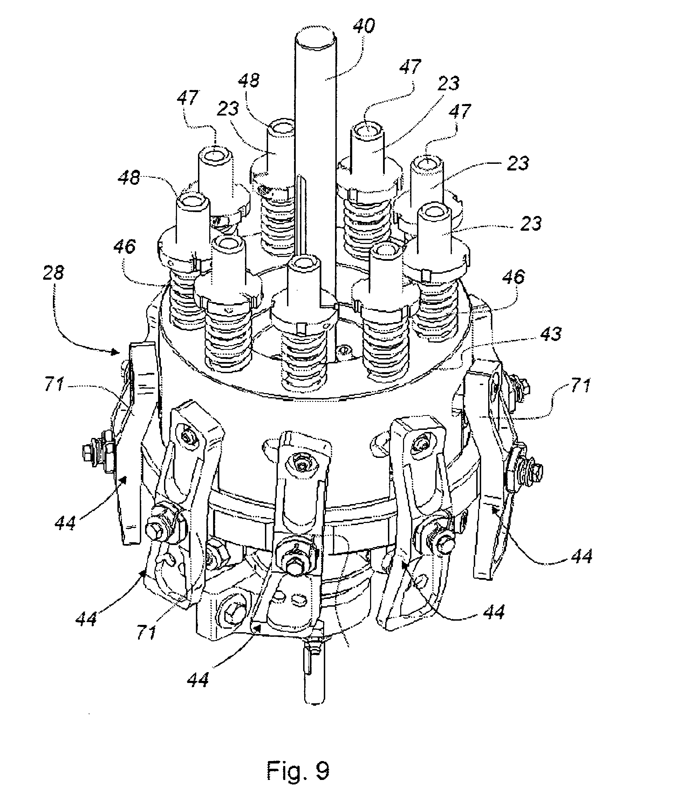

Figur 9 zeigt eine perspektivische Ansicht des zweiten Trägers 28. Jedem der zweiten Kontaktelemente 23 ist dabei eine Vorspann- und Verriegelungseinrichtung 44 vorgesehen, die bei Bedarf eines dieser zweiten Kontaktelemente 23 für die Bewegung in Richtung der Achse 40 freigibt. Wie bereits erwähnt, besitzt jede der Vorspann- und Verriegelungseinrichtungen 44 einen Verriegelungshebel 71, der das zweite Kontaktelement 23 in der vorgespannten Position hält. Die Kontaktflächen 47 der zweiten Kontaktelemente 23 sind jeweils mit einer Ringschneide 48 verbunden. Mittels dieser Ringschneide 48 ist es möglich, einen Vorformling, welcher auszusondern ist, in Zusammenwirkung mit dem ersten Kontaktelement 22 sicher zu halten. Durch diesen sicheren Halt ist es möglich, den Vorformling 30 vom Greifer 54 sicher und zuverlässig abzuziehen.

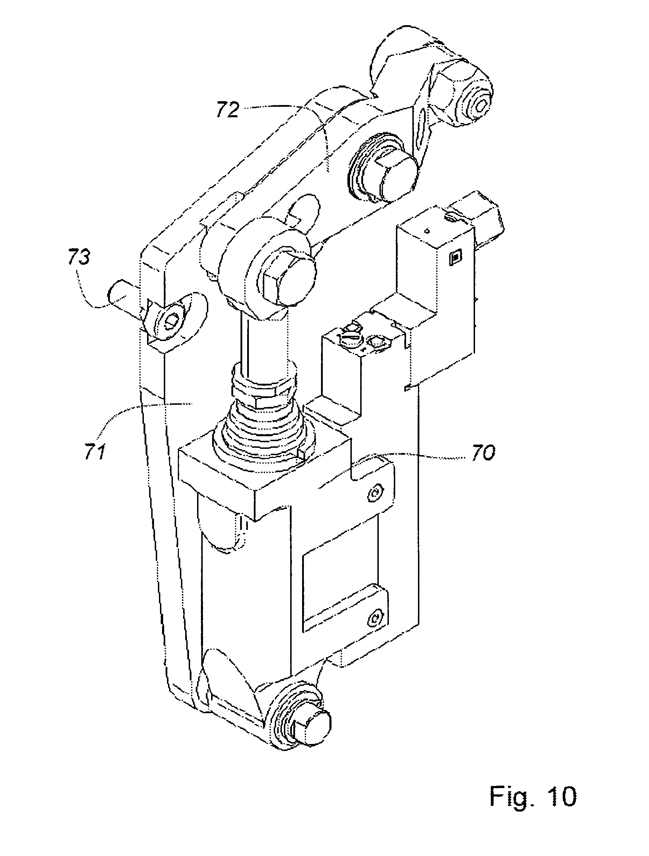

Figur 10 zeigt eine perspektivische Ansicht eines Schnellschaltzylinders 70, der über einen Hebelmechanismus 72 mit dem Verriegelungshebel 71 verbunden ist. Eine Betätigung des Schnellschaltzylinders 70 wird in eine Schwenkbewegung des Verriegelungshebels 71 umgeleitet, so dass ein Bolzen 73 des entsprechenden zweiten Kontaktelements 23 freigegeben wird. Durch diese Freigabe ist es möglich, dass die Feder 46, mit der das zweite Kontaktelement 23 vorgespannt ist, in Richtung des auszusondernden Vorformlings 30 bewegt wird und die für die Aussonderung erforderliche Klemmung des Vorformlings 30 bewirkt.

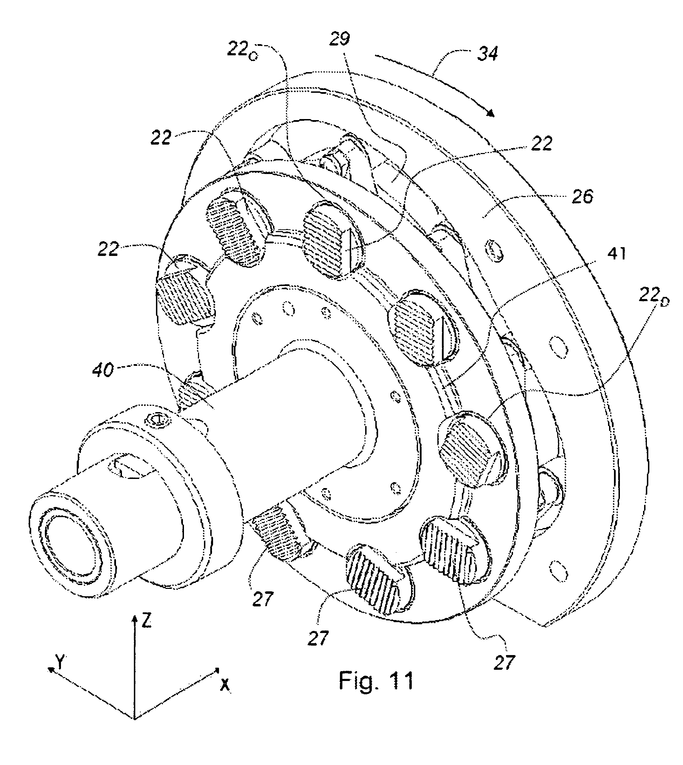

Figur 11 zeigt eine perspektivische Ansicht des ersten Trägers 26, der ebenfalls zusammen mit dem zweiten Träger 28 auf der gemeinsamen Achse 40 montiert ist. Wie bereits in der Figur 9 zu erkennen ist, sind die zweiten Kontaktelemente 23 auf einem konzentrischen Kreis 43 um die gemeinsame Achse 40 angeordnet. In gleicher Weise sind die ersten Kontaktelemente 22 auf dem ersten Träger 26 ebenfalls auf einem konzentrischen Kreis 41 um die Achse 40 angeordnet. Die ersten Kontaktelemente 22 besitzen eine unregelmäßige Oberfläche, so dass in Zusammenwirkung mit der Ringschneide 48 des entsprechenden zweiten Kontaktelements 23 eine sichere Halterung des auszusondernden Vorformlings 30 gewährleistet ist. In der in Figur 11 gezeigten Ausführungsform sind die strukturierten Oberflächen 27 der ersten Kontaktelemente 22 in Form von einer Riffelung ausgebildet. Mit dem Motor 42 werden der erste Träger 26 und der zweite Träger 28, welcher auf der gemeinsamen Achse 40 angeordnet sind, gedreht. Der auszusondernde Vorformling 30 wird dabei mit dem ersten Kontaktelement 22 und dem zweiten Kontaktelement 23 erfasst, wenn sich das erste Kontaktelement 22 und das zweite Kontaktelement 23 in der oberen Position 22_{O} befindet, wie dies in Figur 11 dargestellt ist. Der erste Träger 26 hat eine Kurve 29 ausgebildet. Über die Kurve 29 wird erreicht, dass das erste Kontaktelement 22 für einen Teil der Drehbewegung 34 des ersten Trägers 26 im Wesentlichen für einen Teil der Drehbewegung 34 eine im Wesentlichen horizontale Orientierung einnimmt. Wie in der Darstellung der Figur 11 zu erkennen ist, wird aufgrund der Kurve 29 somit erreicht, dass das erste Kontaktelement 22 eine nicht horizontale Stellung erst in der Position 22_{D} einnimmt, wenn in etwa ein Viertel der Umdrehung des ersten Trägers 26 erreicht ist. In dieser Stellung ist dann der auszusondernde Vorformling 30 vollkommen von dem Greifer 54 abgezogen und kann somit in einen Auffangbehälter (nicht dargestellt) ausgesondert werden. Aufgrund der in Figur 11 gezeigten Kurve ist es somit möglich, dass die Längsachse 32 des Vorformlings 30 von der Position 22_{O} bis zu der Position 22_{D} im Wesentlichen parallel zur Z-Koordinatenrichtung ausgerichtet ist. Dadurch ist ebenfalls sichergestellt, dass der geklemmte bzw. auszusondernde Vorformling 30 keine der voreilenden bzw. nacheilenden Vorformlinge ungewollt herausschlägt.

Die Erfindung wurde unter Bezugnahme auf bevorzugte Ausführungsformen der Erfindung beschrieben. Es ist für einen Fachmann dennoch selbstverständlich, dass Änderungen und Abwandlungen gemacht werden können, ohne dabei den Schutzbereich der nachstehenden Ansprüche zu verlassen.

## Patentansprüche

1. Vorrichtung (20) zum selektiven Aussondern von Vorformlingen (30) mit einer Sortiereinheit (21), die mindestens ein erstes Kontaktelement (22) und mindestens ein zweites Kontaktelement (23) besitzt, die derart ausgebildet sind, dass sie bei Bedarf an gegenüberliegenden Positionen einer Wandung (32) des Vorformlings (30) angreifen, wobei ein Transportweg (24) vorgesehen ist entlang dessen die Vorformlinge (30) die Vorrichtung zum selektiven Aussondern durchlaufen, **dadurch gekennzeichnet, dass** das mindestens eine erste Kontaktelement (22) auf einem ersten Träger (26) und das mindestens eine zweite Kontaktelement (23) auf einem zweiten Träger (28) angeordnet ist und das erste Kontaktelement (22) und das zweite Kontaktelement (23) derart am Vorformling (30) angreifen, dass eine Längsachse (33) des Vorformlings (30) beim Aussondern zumindest zeitweise in Z-Koordinatenrichtung ausgerichtet bleibt, damit der auszusondernde Vorformling (30) beim Aussondern keine der nicht auszusondernden Vorformlinge (30) berührt.

2. Vorrichtung nach Anspruch 1, wobei der erste Träger (26) und der zweite Träger (28) auf einer gemeinsamen Achse (40) drehbar angeordnet sind und wobei lediglich das mindestens eine zweite Kontaktelement (23) in axialer Richtung der gemeinsamen Achse (40) beweglich ausgebildet ist.

3. Vorrichtung nach Anspruch 1 bis 2, wobei der erste Träger (26) kreisförmig ausgebildet ist, wobei mehrere der ersten Kontaktelemente (22) gleichverteilt auf einem um die gemeinsame Achse (40) konzentrischen Kreis (41) angeordnet sind, dass der zweite Träger (28) ebenfalls kreisförmig ausgebildet ist, wobei mehrere der zweiten Kontaktelemente (23) gleichverteilt auf einem um die gemeinsame Achse (40) konzentrischen Kreis (43) angeordnet sind und die ersten Kontaktelemente (22) eine strukturierte Oberfläche (27) aufweisen, die mit der Wandung des Vorformlings (32) in Kontakt tritt.

4. Vorrichtung nach Anspruch 3, wobei jedes der zweiten Kontaktelemente (23) mit einer Vorspann- und Verriegelungseinrichtung (44) versehen ist, die bei Bedarf eines der zweiten Kontaktelemente (23) für die Bewegung in axialer Richtung freigibt, so dass das zweite Kontaktelement (23) in Wirkzusammenhang mit dem ersten Kontaktelement (22) den Vorformling (30) klemmt.

5. Vorrichtung nach Anspruch 4, wobei das zweite Kontaktelement (23) ein mit einer Feder (46) vorgespannter Kolben ist, der an einer Vorderseite eine Kontaktfläche (47) trägt, die mit der Wandung (32) des Vorformlings (30) in Kontakt tritt, wobei die Kontaktfläche (47) des zweiten Kontaktelements (23) eine Ringschneide (48) ausgebildet hat.

6. Vorrichtung nach einem der Ansprüche 1 bis 5, wobei ein Sensor (50) im Transportweg (24) der Vorformlinge (30) vorgesehen ist, der auf mechanische oder auf optische Art und Weise die auszusondernden Vorformlinge (30) erkennt.

7. Vorrichtung nach Anspruch 6, wobei der Sensor (50) ein Näherungsinitiator (52) ist, der die Position eines jeweiligen Greifers (54) für die Vorformlinge (30) erfasst und bei einer Fehlstellung des jeweiligen Vorformlings (30) die Zeit ermittelt, zu der der entsprechende Vorformling (30) an die Vorrichtung (20) zum Aussondern des Vorformlings (30) gelangt.

8. Vorrichtung nach einem der Ansprüche 1 bis 7, wobei der Transportweg (24) für die Vorformlinge (30) derart angelegt ist, dass die Vorformlinge (30) zwischen dem ersten Träger (26) und dem zweiten Träger (28) verlaufen, und wobei die Synchronisierung beispielsweise elektronisch über einen EnDat-Geber (60) erfolgt.

9. Vorrichtung nach einem der Ansprüche 1 bis 8, wobei das vorgespannte mindestens eine zweite Kontaktelement (23) mittels eines Schnellschaltzylinders (70) auslösbar ist und so eine Schwenkbewegung eines Verriegelungshebels (71) bewirkt, so dass das ausgewählte zweite Kontaktelement (23) auf den auszusondernden Vorformling (30) trifft und diesen zusammen mit dem ersten Kontaktelement (22) hält, und dass der erste Träger (26) für jedes Kontaktelement eine Kurve (29) ausgeformt hat, so dass bei der Drehbewegung des ersten Trägers (26) und des zweiten Trägers (28) der geklemmte Vorformling (30), für einen Teilbereich der Drehbewegung (34), mit seiner Längsachse (33) in Z-Koordinatenrichtung ausgerichtet ist.

10. Verfahren zum selektiven Aussondern von Vorformlingen (30)
**gekennzeichnet durch** die folgenden Schritte:
• dass entlang eines Transportweges (24) mehrere Vorformlinge (30) mit jeweils einem Greifer (54) transportiert werden;
• dass an einem Sensor (50) im Transportweg (24) der Vorformlinge (30) die auszusondernden Vorformlinge (30) erkannt werden;
• dass der Transportweg (24) für die Vorformlinge (30) derart angelegt ist, dass die Vorformlinge (30) zwischen einem ersten Träger (26) und einem zweiten Träger (28) verlaufen, wobei der erste Träger (26) mehrere erste Kontaktelemente (22) und der zweite Träger (28) eine entsprechende Vielzahl an zweiten Kontaktelementen (23) besitzt;
• dass das erste oder zweite Kontaktelement (22, 23) derart gezielt bewegt werden, dass ein auszusondernder Vorformling (30) während des Aussonderns zwischen einem ersten Kontaktelement (22) und einem entsprechenden zweiten Kontaktelement (23) geklemmt wird; und
• dass der geklemmte Vorformling (30) zumindest zeitweise in Z-Koordinatenrichtung geklemmt und ausgerichtet bleibt, damit **durch** den auszusondernden Vorformling (30) keine der nicht auszusondernden Vorformlinge (30) beim Aussondern berührt werden.

11. Verfahren nach Anspruch 10, wobei jedes der ersten oder zweiten Kontaktelemente (22, 23) mit einer Vorspann- und Verriegelungseinrichtung (44) versehen ist, durch die bei Bedarf eines der ersten oder zweiten Kontaktelemente (22, 23) für die Bewegung freigegeben wird, so dass der Vorformling (30) zwischen dem zweiten Kontaktelement (23) und dem ersten Kontaktelement (22) geklemmt wird, wobei der erste Träger (26) und der zweite Träger (28) um eine gemeinsame Achse (40) synchron zum Transport der Vorformlinge (30) entlang des Transportweges (24) gedreht werden.

12. Verfahren nach einem der Ansprüche 10 bis 11, **dadurch gekennzeichnet, dass** der erste Träger (26) für jedes Kontaktelement (22) eine Kurve (29) ausgeformt hat, so dass bei der Drehbewegung (34) der geklemmte Vorformling (30) für einen Teilbereich der Drehbewegung (34) eine Längsachse (33) des Vorformlings (30) in Z-Koordinatenrichtung ausgerichtet bleibt.

13. Verfahren nach einem der Ansprüche 10 bis 12, wobei das zweite Kontaktelement (23) ein mit einer Feder (46) vorgespannter Kolben ist, der an einer Vorderseite eine Kontaktfläche (47) trägt, die mit der Wandung (32) des Vorformlings (30) in Kontakt tritt, wenn durch die Synchronisation zwischen dem Transportweg (24) und dem Sensor (50) die Vorspannung gelöst wird.

14. Verfahren nach einem der Ansprüche 10 bis 13, wobei ein Sensor (50) im Transportweg (24) der Vorformlinge (30) vorgesehen wird, wobei der Sensor (50) ein Näherungsinitiator (52) ist, durch den die Position eines jeweiligen Greifers (54) für die Vorformlinge (30) erfasst wird und bei einer Fehlstellung des jeweiligen Vorformlings (30) die Zeit ermittelt wird, zu der der entsprechende Vorformling (30) an die Vorrichtung (20) zum Aussondern des Vorformlings (30) gelangt.

15. Verfahren nach einem der Ansprüche 10 bis 14, wobei die Freigabe der vorgespannten zweiten Kontaktelemente (23) mit einem Schellschaltzylinder (70) durchgeführt wird, so dass dadurch eine Schwenkbewegung eines Verriegelungshebels (71) ausgelöst wird, so dass das ausgewählte zweite Kontaktelement (23) auf den auszusondernden Vorformling (30) trifft und diesen zusammen mit dem ersten Kontaktelement (22) kraftschlüssig und /oder formschlüssig hält.

## Claims

1. An apparatus (20) for selective singling out of preforms (30) by means of a sorting unit (21) which has at least one first contact element (22) and at least one second contact element (23), which are formed in such a way that, if required, they can seize a wall (32) of the preform (30) at opposing positions, wherein a transport path (24) is foreseen along which the preforms (30) run through the apparatus for selective singling out, **characterized in that** the at least one first contact element (22) is arranged on a first carrier (26) and the at least one second contact element (23) is arranged on a second carrier (28) and wherein the first contact element (22) and the second contact element (23) seize the preform (30) in such a way that a longitudinal axis (33) of the preform (30) remains aligned with the Z coordinate direction at least temporarily during singling out so that the preform (30) to be singled out does not touch any preforms (30) which do not need singling out during the singling out process.

2. The apparatus according to Claim 1, wherein the first carrier (26) and the second carrier (28) are arranged rotatably on a common axis (40) and wherein only the at least one second contact element (23) is designed to be movable in an axial direction of the common axis (40).

3. The apparatus according to Claims 1 to 2, wherein the first carrier (26) is formed in a circular manner, wherein several of the first contact elements (22) are evenly arranged and spaced on a concentric circle (41) around the common axis (40), that the second carrier (28) is also formed in a circular manner, wherein several of the second contact elements (23) are evenly arranged and spaced on a concentric circle (43) around the common axis (40) and that the first contact elements (22) have a structured surface (27) which comes into contact with the wall of the preform (32).

4. The apparatus according to Claim 3, wherein each of the second contact elements (23) is fitted with a pretensioning and locking device (44), which, if required, releases one of the second contact elements (23) for the movement in an axial direction so that the second contact element (23) clamps the preform (30) when working in combination with the first contact element (22).

5. The apparatus according to Claim 4, wherein the second contact element (23) is a piston pretensioned by a spring (46), which piston carries a contact surface (47) on a front side, which contact surface (47) of the second contact element (23) comes into contact with the wall (32) of the preform (30) and has formed a cup point (48).

6. The apparatus according to any one of Claims 1 to 5, wherein a sensor (50) is provided in the transport path (24) of the preforms (30), which sensor (50) detects the preform (30) to be singled out by mechanical or optical means.

7. The apparatus according to Claim 6, wherein the sensor (50) is a proximity switch (52) which detects the position of a respective gripper (54) for the preforms (30) and, in the case of false location of the respective preform (30), determines the time required for the respective preform (30) to reach the apparatus (20) for singling out the preform (30).

8. The apparatus according to any one of Claims 1 to 7, wherein the transport path (24) for the preforms (30) is located in such a way that the preforms (30) run between the first carrier (26) and the second carrier (28) and wherein the synchronization takes place, for example, electronically through an EnDat encoder (60).

9. The apparatus according to any one of Claims 1 to 8, wherein the pretensioned at least one second contact element (23) can be released by means of a quick switching cylinder (70) and, in this way, causes a swiveling movement of a locking lever (71) so that the selected second contact element (23) touches on the preform (30) to be singled out and holds this together with the first contact element (22) and that the first carrier (26) for each contact element has formed out a curve (29) so that, for a rotational movement of the first carrier (26) and the second carrier (28), the clamped preform (30) is aligned for a portion of the rotational movement (34), with its longitudinal axis (33) in the Z coordinate direction,

10. A method for selective singling out of preforms (30) **characterized by** the following steps:
• a plurality of preforms (30) are transported along a transport path (24) each by one gripper (54);
• the transport path (24) for the preforms (30) is located in such a way that the preforms (30) to be singled out are detected by a sensor (50) in the transport path (24) for the preforms (30);the preforms (30) run between a first carrier (26) and a second carrier (28), wherein the first carrier (26) has a plurality of first contact elements (22) and the second carrier (28) has a corresponding plurality of second contact elements (23);
• the first or second contact element (22, 23) is moved in a targeted manner in such a way that a preform (30) to be singled out is clamped during the singling out process between a first contact element (22) and a respective second contact element (23); and
• the clamped preform (30), at least temporarily, remains clamped and aligned in the Z coordinate direction so that the preform (30) to be singled out does not touch any preforms (30) which do not need singling out during singling out.

11. The method according to Claim 10 wherein each of the first or second contact elements (22, 23) is fitted with a pretensioning and locking device (44) through which, if required, one of the first or second contact elements (22, 23) is released for the movement, so that the preform (30) is clamped between the second contact element (23) and the first contact element (22), wherein the first carrier (26) and the second carrier (28) are turned synchronously around a common axis (40) to transport the preforms (30) along the transport path (24).

12. The method according to any one of Claims 10 to 11, **characterized in that** the first carrier (26) has formed a curve (29) for every contact element (22) so that the clamped preform (30) remains aligned for a portion of the rotational movement (34), with its longitudinal axis (33) in the Z coordinate direction for the rotational movement (34).

13. The method according to any one of Claims 10 to 12, wherein the second contact element (23) is a piston pretensioned by a spring (46) which piston carries a contact surface (47) on a front side, which contact surface (47) comes into contact with the wall (32) of the preform (30) if the pretension between the transport path (24) and the sensor (50) is released by the synchronisation.

14. The method according to any one of Claims 10 to 13, wherein a sensor (50) is provided in the transport path (24) of the preform (30), wherein the sensor (50) is a proximity switch (52) which detects the position of a respective gripper (54) for the preforms (30) and, in the case of false location of the respective preform (30), determines the time required for the respective preform (30) to reach the apparatus (20) for singling out the preform (30).

15. The method according to any one of Claims 10 to 14, wherein the release of the pretensioned second contact elements (23) is performed by means of a quick switching cylinder (70) so that a swiveling movement of a locking lever (71) is thereby triggered so that the selected second contact element (23) touches on the preform (30) to be singled out and holds this together with the first contact element (22) as a force-fit and/or a form-fit.

## Revendications

1. Dispositif (20) pour la séparation sélective de préformes (30) avec une unité de tri (21) qui possède au moins un premier élément de contact (22) et au moins un deuxième élément de contact (23) qui sont formés de manière à ce qu'ils agrippent en cas de besoin à des positions opposées d'une paroi (32) de la préforme (30), étant donné qu'est prévu un trajet de transport (24) le long duquel les préformes (30) traversent le dispositif séparation sélective, **caractérisé en ce que** le au moins un premier élément de contact (22) est disposé sur un premier support (26) et le au moins un deuxième contact (23) est disposé sur un deuxième support (28) et étant donné que le premier élément de contact (22) et le deuxième élément de contact (23) agrippent la préforme (30) de manière à ce qu'un axe longitudinal (33) de la préforme (30) reste aligné au moins temporairement lors de la séparation dans le sens de coordonnées Z afin que, lors de la séparation, la préforme (30) a séparer ne touche aucune des préformes (30) à ne pas séparer.

2. Dispositif selon la revendication 1, étant donné que le premier support (26) et le deuxième support (28) sont disposés de manière rotative sur un axe commun (40) et étant donné que seul le au moins un deuxième élément de contact (23) est mobile dans le sens axial de l'axe commun (40).

3. Dispositif selon la revendication 1 à 2, étant donné que le premier support (26) a une forme circulaire, étant donné que plusieurs des premiers éléments de contact (22) sont répartis uniformément sur un cercle (41) concentrique autour de l'axe commun (40), **caractérisé en ce que** le deuxième support (28) a une forme également circulaire, étant donné que plusieurs des deuxièmes éléments de contact (23) sont répartis uniformément sur un cercle concentrique (43) autour de l'axe commun (40) et **en ce que** les premiers éléments de contact (22) présentent une surface structurée (27) qui entre en contact avec la paroi de la préforme (32).

4. Dispositif selon la revendication 3, étant donné que chacun des deuxièmes éléments de contact (23) comporte un équipement de précontrainte et de verrouillage (44) qui, en cas de besoin, libère un des deuxièmes éléments de contact (23) pour le mouvement dans le sens axial de manière à ce que le deuxième élément de contact (23) serre la préforme (30) en relation fonctionnelle avec le premier élément de contact (22).

5. Dispositif selon la revendication 4, étant donné que le deuxième élément de contact (23) est un piston précontraint avec une languette (46), piston qui porte sur un côté avant une surface de contact (47) qui entre en contact avec la paroi (32) de la préforme (30), étant donné que la surface de contact (47) du deuxième élément de contact (23) a formé un tranchant annulaire (48).

6. Dispositif selon l'une quelconque des revendications 1 à 5, étant donné qu'est prévu dans le trajet de transport (24) des préformes (30) un détecteur (50) qui détecte de manière mécanique ou de manière optique les préformes (30) à séparer.

7. Dispositif selon la revendication 6, étant donné que le détecteur (50) est un détecteur de proximité (52) qui détecte la position d'un grappin (54) respectif pour les préformes (30) et, dans le cas où la préforme (30) respective n'est pas correctement positionnée, détermine le temps nécessaire pour que la préforme (30) correspondante arrive au dispositif (20) de séparation de la préforme (30).

8. Dispositif selon l'une quelconque des revendications 1 à 7, étant donné que le trajet de transport (24) pour les préformes (30) est réalisé de manière à ce que les préformes (30) courent entre le premier support (26) et le deuxième support (28) et étant donné que la synchronisation se fait par exemple électroniquement via un transmetteur EnDat (60).

9. Dispositif selon l'une quelconque des revendications 1 à 8, étant donné que le au moins un deuxième élément de contact (23) précontraint peut être déclenché au moyen d'un cylindre à action rapide (70) et cause ainsi un mouvement pivotant d'un levier de verrouillage (71) de manière à ce que le deuxième élément de contact (23) sélectionné entre en contact avec la préforme (30) à séparer et tienne cette dernière ensemble avec le premier élément de contact (22) et à ce que le premier support (26) pour chaque élément de contact ait formé une courbe (29) de manière à ce que, lors du mouvement rotatif du premier support (26) et du deuxième support (28), la préforme (30) serrée soit alignée, pour une plage partielle du mouvement rotatif (34), avec son axe longitudinal (33) dans le sens des coordonnées Z,

10. Procédé pour la séparation sélective de préformes, **caractérisé par** les étapes suivantes :
• une pluralité de préformes (30) sont transportées le long d'un trajet de transport (24) avec respectivement un grappin (54) ;
• les préformes (30) à séparer sont détectées au niveau d'un détecteur (50) situé dans le trajet de transport (24) des préformes (30) ;
• le trajet de transport (24) pour les préformes (30) est réalisé de manière à ce que les préformes (30) courent entre un premier support (26) et un deuxième support (28), étant donné que le premier support (26) possède une pluralité de premiers éléments de contact (22) et le deuxième support (28) une pluralité correspondante de deuxièmes éléments de contact (23) ;
• le premier ou deuxième élément de contact (22, 23) est déplacé de façon ciblée de manière à ce qu'une préforme (30) à séparer soit serrée pendant la séparation entre un premier élément de contact (22) et un deuxième élément de contact (23) correspondant ; et
• la préforme (30) serrée est au moins temporairement serrée et reste alignée dans le sens des coordonnées Z afin que, lors de la séparation, aucune des préformes (30) à ne pas séparer n'entre en contact avec la préforme (30) à séparer.

11. Procédé selon la revendication 10, étant donné que chacun des premiers ou deuxièmes éléments de contact (22, 23) comporte un équipement de précontrainte et de verrouillage (44) au moyen duquel, en cas de besoin, un des premiers ou deuxièmes éléments de contact (22, 23) est libéré pour le mouvement de manière à ce que la préforme (30) soit serrée entre le deuxième élément de contact (23) et le premier élément de contact (22), étant donné que le premier support (26) et le deuxième support (28) sont tournés de manière synchronisée autour d'un axe commun (40) pour le transport des préformes (30) le long de du trajet de transport (24).

12. Procédé selon l'une quelconque des revendications 10 à 11, **caractérisé en ce que** le premier support (26) pour chaque élément de contact (22) a formé une courbe (29) de manière à ce que, lors du mouvement rotatif (34), la préforme (30) serrée reste alignée, pour une plage partielle du mouvement rotatif (34), avec son axe longitudinal (33) dans le sens des coordonnées Z.

13. Procédé selon l'une quelconque des revendications 10 à 12, étant donné que le deuxième élément de contact (23) est un piston précontraint avec une languette (46), piston qui porte sur un côté avant une surface de contact (47) qui entre en contact avec la paroi (32) de la préforme (30) lorsque la précontrainte est relâchée par la synchronisation entre le trajet de transport (24) et le détecteur (50).

14. Procédé selon l'une quelconque des revendications 10 à 13, étant donné qu'un détecteur (50) est prévu dans le trajet de transport (24) des préformes (30), étant donné que le détecteur (50) est un détecteur de proximité (52) qui détecte la position d'un grappin (54) respectif pour les préformes (30) et, dans le cas où la préforme (30) respective n'est pas correctement positionnée, détermine le temps nécessaire pour que la préforme (30) correspondante arrive au dispositif (20) de séparation de la préforme (30).

15. Procédé selon l'une quelconque des revendications 10 à 14, étant donné que la libération des deuxièmes éléments de contact (23) précontraints est effectuée avec un cylindre à action rapide (70), de manière à ce que, ainsi, un mouvement pivotant d'un levier de verrouillage (71) soit déclenché, de manière à ce que le deuxième élément de contact (23) sélectionné entre en contact avec la préforme (30) à séparer et tienne cette dernière ensemble avec le premier élément de contact (22) par adhérence et/ou par contact positif.
